# EUROPÄISCHE PATENTSCHRIFT

(11) **EP 3 327 256 B1**
(45) Veröffentlichungstag und Bekanntmachung des Hinweises auf die Patenterteilung: **12.06.2019**
(21) Anmeldenummer: 17202356.6
(22) Anmeldetag: 17.11.2017
(51) Int. Cl.: F01D 17/16, F02C 7/042, F04D 29/56

(54) **LEITSCHAUFELBAUGRUPPE MIT AUSGLEICHSEINRICHTUNG**
STATOR VANE ASSEMBLY WITH COMPENSATION
ENSEMBLE D'AUBE DIRECTRICE POURVU DE DISPOSITIF DE COMPENSATION

(30) Priorität: 23.11.2016 DE 102016122640
(43) Veröffentlichungstag der Anmeldung: 30.05.2018
(73) Patentinhaber: Rolls-Royce Deutschland Ltd & Co KG, 15827 Blankenfelde-Mahlow (DE)
(72) Erfinder: BISHOP, Jeff, Willington/Derbyshire, DE65 6BU (GB)
(74) Vertreter: Maikowski & Ninnemann Patentanwälte Partnerschaft mbB

(56) Entgegenhaltungen:
- EP-A2- 1 531 237
- WO-A1-2014/052842
- DE-A1-102014 219 552
- US-A1- 2014 234 082
- US-B2- 9 309 778

## Beschreibung

Die Erfindung betrifft insbesondere eine Leitschaufelbaugruppe nach dem Oberbegriff des Anspruchs 1.

Es ist allgemein bekannt, in Triebwerken, zum Beispiel Turbomaschinen und insbesondere Gasturbinentriebwerken verstellbare Leitschaufeln für die Beeinflussung der Strömung in Abhängigkeit von der Drehzahl rotierender Laufschaufeln vorzusehen. Insbesondere bei Gasturbinentriebwerken werden üblicherweise verstellbare Leitschaufeln im Bereich des Verdichters eingesetzt, wobei die Leitschaufeln in Abhängigkeit der Verdichterdrehzahl verstellt werden. Die verstellbaren Leitschaufeln werden hierbei in der englischen Fachsprache als *variable stator vanes* kurz "VSV" bezeichnet.

Die verstellbaren Leitschaufeln sind hier üblicherweise Bestandteil einer Leitschaufelreihe und innerhalb eines Gehäuses angeordnet, in dem auch die rotierenden Laufschaufeln angeordnet sind. Die einzelnen Leitschaufeln sind dabei in der Praxis jeweils über einen Lagerzapfen verstellbar an dem Gehäuse gelagert. Innerhalb des Gehäuses ist üblicherweise eine drehbare Lagerung einer Leitschaufel an einer Nabe, z.B. eines Verdichters, vorgesehen. An dem Gehäuse ist jeder Lagerzapfen drehbar in einer zugehörigen Lageröffnung in der Wandung des Gehäuses gelagert. Dabei durchgreift der Lagerzapfen diese Lageröffnung entlang einer Erstreckungsrichtung des Lagerzapfens, sodass ein Ende des Lagerzapfens an einer Außenseite des Gehäuses zugänglich ist, um durch Drehung des Lagerzapfens die entsprechende Leitschaufel verstellen zu können. Hierbei greift üblicherweise jeweils ein Hebel an einem Zapfenende an, der an einem Verstellelement in Form eine Verstellrings eines Verstellmechanismus befestigt ist, um durch Verstellung des Verstellelements und mehrerer hieran angelenkter Hebel gleichzeitig mehrere Leitschaufeln zu verstellen. Eine solche, gattungsgemäße Leitschaufelbaugruppe mit verstellbaren Leitschaufeln für einen Verdichter eines Gasturbinentriebwerks zeigt beispielsweise die US 9,309,778 B2. Die Lagerzapfen der Leitschaufeln, die häufig auch als Spindeln bezeichnet werden, sind in der Praxis in radial vorstehenden, hülsenförmigen Lagerfortsätzen des Gehäuses vorgesehen. Diese Lagerfortsätze sind an einer Wandung des Gehäuses ausgeformt und stellen die drehbare Lagerung und Abstützung der Lagerzapfen sicher.

Das wenigstens eine Verstellelement der für die Verstellung der Leitschaufeln vorgesehenen Verstelleinrichtung stützt sich üblicherweise an einer Außenseite des Gehäuses ab und ist relativ hierzu in Umfangsrichtung verstellbar, um eine Drehung der Leitschaufeln um ihre jeweilige Drehachse zu bewirken. Um das Verstellelement dabei in einem definierten radialen Abstand zur Außenseite des Gehäuses zu halten, ist es bekannt, eine oder mehrere Ausgleichseinrichtungen vorzusehen. Eine Ausgleichseinrichtung ist hierbei vor allem dazu vorgesehen, um beim Betrieb eines Triebwerks, in dem sich das Gehäuse in Abhängigkeit des jeweiligen Zyklus stärker als das Verstellelement erwärmt, zu vermeiden, dass das Gehäuse das Verstellelement radial nach außen verlagert und hierdurch die Verstellgenauigkeit des Verstellelements reduziert wird oder sogar ein Verformen oder ein Verklemmen des Verstellelements auftritt. Über eine Ausgleichseinrichtung ist ein radialer Abstand des Verstellelements zu der Außenseite des Gehäuses vorgegeben und es werden unterschiedliche Wärmeausdehnungen des Verstellelements einerseits und des Gehäuses andererseits kompensiert, um das Verstellelement in einer definierten Lage relativ zu dem Gehäuse halten, z.B. ein ringförmiges Verstellelement bezüglich des Gehäuses zentriert zu halten. Hierfür sind Beispielsweise mehrere Ausgleichseinrichtungen entlang der Umfangsrichtung verteilt angeordnet, um das Verstellelement an unterschiedlichen Stellen gegen das Gehäuse abzustützen und zu diesem zu zentrieren.

Aus der DE 10 2014 219 552 A1 ist beispielsweise eine Ausgleichseinrichtung mit einem Abstandshalter bekannt, der in einem Ausgleichselement in Form einer Buchse gehalten ist. Diese Buchse weist einen höheren Wärmeausdehnungskoeffizienten auf als das Verstellelement und deren Abstandshalter, über den sich das Verstellelement an einer Außenseite des Gehäuses abstützen kann. Im Betrieb des Triebwerks erwärmen sich sowohl das Gehäuse der Leitschaufelbaugruppe als auch die als Ausgleichselement fungierende Buchse und das Verstellelement. Die Wärmeausdehnung der Buchse führt hierbei zu einer Verlagerung des hieran befestigten Abstandshalter radial nach außen, während die Wärmeausdehnung des Verstellelements und des Abstandshalters zu einer Verlagerung radial nach innen führen. Durch den höheren Wärmeausdehnungskoeffizienten der Buchse erfolgt im Ergebnis eine temperaturbedingte radiale Verlagerung des Abstandshalters nach außen, die im Wesentlichen mit der temperaturbedingt auftretenden radialen Dehnung des Gehäuses korrespondiert. Die unterschiedlichen Wärmeausdehnungen des Gehäuses und des Verstellelements werden dementsprechend im Wesentlichen ausgeglichen und ein radialer Abstand zwischen dem Abstandshalter und der Außenseite des Gehäuses wird im Wesentlichen konstant gehalten. Auf diese Weise kann auch eine Zentrierung des Verstellelements zu dem Gehäuse im Betrieb des Triebwerks aufrechterhalten werden.

Bei der aus der DE 10 2014 219 552 A1 bekannten Leitschaufelbaugruppe ist jedoch die Montage der Ausgleichseinrichtung vergleichsweise aufwendig. Insbesondere muss der Abstandshalter relativ zu der Buchse und dem Verstellelement nahezu exakt positioniert werden, um die gewünschte Kompensation zu erreichen. Zudem ist die Buchse in eine Durchgangsbohrung des Verstellelements eingesetzt, sodass bei der Auslegung der einzelnen Komponenten der Ausgleichseinrichtung insbesondere aufwendig berücksichtigt werden muss, welche Wärmeübertragung sich zwischen dem Verstellelement und der hierin platzierten Buchse ergibt.

Eine weitere Leitschaufelgruppe ist aus der EP 1531237 A2 bekannt.

Der Erfindung liegt daher die Aufgabe zugrunde, ausgehend von dem eingangs genannten Stand der Technik eine verbesserte Leitschaufelbaugruppe bereitzustellen.

Diese Aufgabe wird mit einer Leitschaufelbaugruppe des Anspruchs 1 gelöst.

Eine Ausgleichseinrichtung einer erfindungsgemäßen Leitschaufelbaugruppe, mittels der unterschiedliche Wärmeausdehnungen eines Verstellelements für die Verstellung der Leitschaufeln einerseits und eines die Leitschaufeln drehbar lagernden Gehäuses andererseits zumindest teilweise kompensierbar sind, definiert eine Anlagefläche für das Verstellelement und weist ein zwischen dem Verstellelement und der Außenseite des Gehäuses angeordnetes Ausgleichselement auf. Dieses Ausgleichselement ist an dem Gehäuse befestigt und führt bei einer Wärmeausdehnung in Umfangsrichtung zu einer radialen Verlagerung der Anlagefläche für das Verstellelement. Über das Ausgleichselement ist somit eine temperaturbedingte Verlagerung einer Anlagefläche für das Verstellelement in radialer Richtung, und zwar bezüglich des Gehäuses, erreicht, sodass hierüber eine radiale Wärmeausdehnung des Gehäuses bezüglich des Verstellelements kompensiert werden kann und eine vorgegebene Relativlage des Verstellelements zu dem Gehäuse im Wesentlichen erhalten bleibt, zum Beispiel eine Zentrierung des Verstellelements zu dem Gehäuse.

Die Ausgleichseinrichtung mit dem Ausgleichselement ist demgemäß in einer Ausführungsvariante derart ausgestaltet und an dem Gehäuse angeordnet, dass eine temperaturbedingte radiale Verlagerung der Anlagefläche bezüglich des Gehäuses entgegengesetzt zu einer radialen Wärmeausdehnung des Gehäuses erfolgt. Mit anderen Worten ist die Ausgleichseinrichtung und insbesondere das Ausgleichselement derart ausgestaltet, dass hierüber bei einer Temperaturerhöhung ein radialer Abstand der Anlagefläche, in Bezug auf das Gehäuse, für das Verstellelement verringert wird, während sich das Gehäuse in radialer Richtung (im Zuge einer thermischen Expansion) nach außen ausdehnt. Umgekehrt geht eine Schrumpfung des Gehäuses in radialer Richtung bei einer Temperaturabsenkung (thermische Kontraktion) mit einer radialen Verlagerung der Anlagefläche bezüglich des Gehäuses nach außen einher, sodass sich ein radialer Abstand zwischen der Anlagefläche und der Außenseite des Gehäuses vergrößert.

Für die vorstehend erläuterte temperaturgesteuerte Verlagerung der Anlagefläche weist das Ausgleichselement in einer Ausführungsvariante einen höheren Wärmeausdehnungskoeffizienten auf als das Gehäuse. Bei identischer Temperaturveränderung dehnt sich folglich das Ausgleichselement stärker aus als das Gehäuse, um hierüber eine zumindest teilweise Kompensation der unterschiedlichen Wärmeausdehnungen des Verstellelements einerseits und des Gehäuses andererseits zu erreichen.

Die Ausgleichseinrichtung ist wenigstens zweiteilig aufgebaut und die Ausgleichseinrichtung weist zusätzlich zu dem Ausgleichselement ein separates, hiermit verbundenes Abstandselement auf, an dem die Anlagefläche vorgesehen ist. In dieser Variante ist folglich das an dem Gehäuse befestigte und damit üblicherweise in unmittelbarem Kontakt mit dem Gehäuse stehende Ausgleichselement derart mit dem zusätzlichen Abstandselement gekoppelt, dass die Wärmeausdehnung des Ausgleichselements zu einer radialen Verlagerung der Anlagefläche des zusätzlichen Abstandselements führt. In diesem Zusammenhang ist vorgesehen, dass das Abstandselement und das Ausgleichselement derart ausgebildet und miteinander verbunden sind, dass sich bei einer temperaturbedingten Dehnung des Ausgleichselements entlang der Umfangsrichtung ein radialer Abstand zwischen dem Ausgleichselement und einem Abschnitt des Abstandselements verändert, an dem die Anlagefläche für das Verstellelement vorgesehen ist. Das zum Beispiel längserstreckte und eine Längserstreckung entlang der Umfangsrichtung aufweisende Abstandselement dehnt sich somit in dieser Variante umfangsseitig bei einer Temperaturerhöhung aus und ist mit dem Abstandselement derart verbunden, dass die Wärmeausdehnung des Ausgleichselements zu einer Veränderung des radialen Abstands zwischen dem Ausgleichselement und einem die Anlagefläche vorsehenden Abschnitts des Abstandselements führt, vorzugsweise zu einer Verringerung dieses radialen Abstands.

Insbesondere hierfür kann vorgesehen sein, dass das an dem Gehäuse befestigte Ausgleichselement einen höheren Wärmeausdehnungskoeffizienten aufweist als das Abstandselement. Bei gleicher Temperaturänderung fällt somit eine Wärmeausdehnung an dem Ausgleichselement größer aus als an dem Abstandselement. Über das sich ausdehnende Ausgleichselement kann derart eine Verlagerungsbewegung eines Abschnitts des Abstandselements hervorgerufen werden, die allein durch eine Wärmeausdehnung des Abstandselements nicht oder kaum erzielbar wäre.

Die Anlagefläche für das Verstellelement kann grundsätzlich dafür ausgebildet und vorgesehen sein, dass ein Abschnitt des Verstellelements zumindest temporär (in Abhängigkeit von einem Betriebszyklus des Triebwerks) hieran unmittelbar anliegt. Es ist in einer Variante aber ebenfalls z.B. möglich, dass an der Anlagefläche wenigstens ein zusätzliches Gleitelement (unbeweglich) fixiert ist und nur an diesem Gleitelement ein Abschnitt des Verstellelements zumindest temporär unmittelbar anliegen kann.

In einer Ausführungsvariante ist das Ausgleichselement über mindestens ein Befestigungselement an dem Gehäuse befestigt, das bei der Montage der Ausgleichseinrichtung durch eine Durchgangsöffnung des Abstandselements - zum Beispiel in der Anlagefläche - geführt wird, um sich teilweise durch eine Befestigungsöffnung des Ausgleichselements zu erstrecken und das Ausgleichselement an dem Gehäuse festzulegen, beispielsweise indem das Befestigungselement mit einem Außengewinde in das Gehäuse eingedreht wird.

Um eine Verlagerung der an einem Abschnitt des Abstandselements vorgesehenen Anlagefläche durch eine Wärmeausdehnung des Ausgleichselements zu bewirken, bietet es sich an, dass Abstandselement selbst nicht an dem Gehäuse zu befestigen, sondern lediglich an dem Ausgleichselement festzulegen. Beispielsweise ist das Abstandselement an wenigstens zwei in Umfangsrichtung zueinander beabstandeten Befestigungsstellen mit dem Ausgleichselement verbunden. In einer Ausführungsvariante erfolgt diese Verbindung über wenigstens ein separates Befestigungselement, wie zum Beispiel einen Schraubbolzen.

In einer Weiterbildung weist das Abstandselement für die Verbindung mit dem Ausgleichselement wenigstens zwei Verbindungsarme auf, zwischen denen sich eine radial bezüglich der Mittelachse zu dem Ausgleichselement beabstandeter Grundkörper des Abstandselements erstreckt, an dem die Anlagefläche für das Verstellelement vorgesehen ist. Das Ausgleichselement und das hiermit verbundene Abstandselement liegen folglich in einem Zwischenraum zwischen dem Verstellelement für die Verstellung der Leitschaufeln und dem Gehäuse, an dem die Leitschaufeln drehbar gelagert sind, vor, wobei der Grundkörper des Abstandselements mit der Anlagefläche bezogen auf die Mittelachse radial weiter außen als das an dem Gehäuse befestigten Ausgleichselement und mit zumindest einem geringfügigen radialen Abstand zu dem Ausgleichselement angeordnet ist. Der Grundkörper des Abstandselements kann sich hierbei entlang der Umfangsrichtung erstrecken und bei Wärmeausdehnung des Ausgleichselements in seinem radialen Abstand zu dem Ausgleichselement veränderbar sein, um damit temperaturgesteuert die Anlagefläche für die Anlage und gegebenenfalls Abstützung des Verstellelements relativ zu dem Gehäuse zu verlagern.

In einem Ausführungsbeispiel ist das Abstandselement über vier Verbindungsarme mit dem Ausgleichselement verbunden, die paarweise einander gegenüberliegend an zwei Seitenflächen des Ausgleichselements angeordnet sind, wobei diese Seitenflächen bezogen auf die Mittelachse der Leitschaufelbaugruppe voneinander abgewandt sind. Beispielsweise erstreckt sich der Grundkörper des Abstandselements entlang der Umfangsrichtung von einem ersten Paar Verbindungsarme zu einem zweiten Paar Verbindungsarme, wobei bei jedem Paar Verbindungsarme ein Verbindungsarm an einer ersten Seite des Ausgleichselements angeordnet ist und ein anderer, gegenüberliegender Verbindungsarm an einer anderen, der ersten Seite abgewandten zweiten Seite des Ausgleichselements. Zur Festlegung des Abstandselements an dem Ausgleichselement und der Verbindung der Verbindungsarme mit dem Ausgleichselement ist beispielsweise ein Befestigungselement, wie ein Bolzen, eine Schraube oder ein Niet, vorgesehen. In einer Ausführungsvariante sind zwei sich gegenüberliegende Verbindungsarme eines Paares von Verbindungsarmen durch ein Befestigungselement miteinander verbunden und an dem Ausgleichselement fixiert, das sich durch das Ausgleichselement hindurch erstreckt. Das Befestigungselement erstreckt sich hierbei, beispielsweise parallel zur Mittelachse, durch eine oder mehrere Durchgangsbohrungen an dem Ausgleichselement sowie zwei Durchgangsöffnungen an den einander gegenüberliegenden Verbindungsarmen, um diese Verbindungsarme bestimmungsgemäß mit dem Ausgleichselement starr oder gelenkig zu verbinden.

Für die radiale Verlagerbarkeit des die Anlagefläche aufweisenden Grundkörpers des Abstandselements, über die zumindest teilweise die unterschiedlichen Wärmeausdehnungen des Verstellelements und des Gehäuses der Leitschaufelbaugruppe kombinierbar sein sollen, sind das Abstandelement und das Ausgleichselement in einer Ausführungsvariante derart ausgebildet und miteinander verbunden, dass sich der Grundkörper des Abstandselements, zwei Verbindungarme (der mindestens zwei Verbindungarme) des Abstandselements und das Ausgleichselement entlang der Mittelachse betrachtet an Kanten einer virtuellen Trapezkontur entlang erstrecken. Die vorgenannten Elemente und Komponenten der Ausgleichseinrichtung definieren somit in einer Achsrichtung entlang der Mittelachse betrachtet eine trapezförmige Kontur. Diese trapezförmige Kontur kann temperaturbedingt über die thermische Expansion oder thermische Kontraktion des an dem Gehäuse befestigten Ausgleichselements (in radialer Richtung) gestaucht oder gestreckt werden, um unterschiedlich starke Wärmeausdehnungen (Expansion oder Kontraktion) des Gehäuses und des Verstellelements der Leitschaufelbaugruppe auszugleichen.

In diesem Zusammenhang ist beispielsweise vorgesehen, dass sich das Ausgleichselement an einer Basis der virtuellen Trapezkontur, der Grundkörper an einer gegenüber der Basis kürzeren Grundseite der virtuellen Trapezkontur und die zwei Verbindungsarme des Abstandselements an zwei Schenkeln der virtuellen Trapezkontur entlang erstrecken. Die virtuelle Trapezkontur kann grundsätzlich der Kontur eines gleichschenkligen Trapezes entsprechen. Dementsprechend sind die zwei Verbindungsarme hier zueinander symmetrisch und insbesondere mit gleicher wirksamer Länge (zwischen dem Grundkörper des Abstandselements und dem Ausgleichselement) ausgebildet.

Das Ausgleichselement ist in einer Ausführungsvariante, insbesondere zur Gewichtseinsparung, rohr- oder hülsenförmig ausgebildet. Alternativ kann das Ausgleichselement beispielsweise längserstreckt, aber nicht hohl, z.B. stabförmig, ausgebildet sein.

In einer Ausführungsvariante, bei der kein separates Abstandselement vorgesehen ist, kann die Anlagefläche für das Verstellelement durch das Ausgleichselement selbst ausgebildet sein. Insbesondere in dieser Variante weist das Ausgleichselement dann gegebenenfalls auch einen niedrigeren Wärmeausdehnungskoeffizienten auf als das Gehäuse, an dem es befestigt ist.

Hierbei kann die Kontur des Ausgleichselements in einer Seitenansicht entlang der Mittelachse der Leitschaufelbaugruppe betrachtet ebenfalls trapezförmig sein, um bei einer thermischen Expansion des Gehäuses und geringerer Wärmeausdehnung des Ausgleichselements das Ausgleichselement über an dem Gehäuse befestigte und zueinander entlang der Umfangsrichtung zueinander beabstandete Abschnitte des Ausgleichselements zu längen. Die trapezförmige Kontur wird damit entlang der Umfangsrichtung gestreckt, sodass ein weiterer, zu dem Gehäuse radial beabstandeter Abschnitt des Ausgleichselements, an dem die Anlagefläche vorgesehen ist und der zwischen den an dem Gehäuse befestigten Abschnitten liegt, radial zu dem Gehäuse verlagert und der Außenseite des Gehäuses angenähert wird. Bei einer thermischen Expansion des Gehäuses reduziert sich hier somit eine radiale Höhe des Ausgleichselements selbst und nicht, wie bei dem vorstehend erläuterten Ausführungsbeispielen, die radiale Höhe eines mit dem Ausgleichselement verbundenen, separaten Abstandselements. Vielmehr erstrecken sich in dieser Variante das Ausgleichselement und ein Abschnitt des Gehäuses, an dem es befestigt ist, entlang der Kanten einer virtuellen Trapezkontur, wobei sich der Abschnitt des Gehäuses entlang einer Basis der Trapezkontur erstreckt und zwei Schenkel sowie eine der Basis gegenüberliegende, kürzere Grundseite der Trapezkontur (mit der Anlagefläche für das Verstellelement) durch das Ausgleichselement definiert sind.

Das Verstellelement kann grundsätzlich an der Ausgleichseinrichtung abgestützt sein und mithin an der durch die Ausgleichseinrichtung bereitgestellten und temperaturbedingt radial verlagerbaren Anlagefläche anliegen.

Insbesondere für die Erhaltung einer vorgegebenen Relativlage des Verstellelements bezüglich des Gehäuses auch bei auftretender unterschiedlicher Wärmeausdehnungen des Gehäuses und des Verstellelements, wie zum Beispiel die Erhaltung der Zentrierung eines ringförmigen Verstellelements bezüglich des Gehäuses, können entlang der Umfangsrichtung mehrere zueinander beabstandete, jeweils mit dem Gehäuse gekoppelte Ausgleichseinrichtungen vorgesehen sein.

Grundsätzlich kann das Verstellelement als einteiliger oder mehrteiliger Verstellring ausgebildet sein, über den mehrere Leitschaufeln gemeinsam verstellbar sind, vorzugsweise indem der Verstellring entlang der Umfangsrichtung verstellt wird. Alternativ oder ergänzend kann das Verstellelement ringsegment- oder ringförmig ausgebildet sein.

Beispielsweise ist ein mit einem Abstandselement kombiniertes Ausgleichselement zumindest teilweise aus (Edel-) Stahl hergestellt respektive weist als Herstellungsmaterial (Edel-) Stahl auf. Das Abstandselement kann zumindest teilweise aus Titan, insbesondere einer Titanlegierung hergestellt sein respektive weist das Abstandselement als Herstellungsmaterial zumindest teilweise Titan insbesondere eine Titanlegierung auf. Bei einem einzelnen Ausgleichselement, das einen gegenüber dem Gehäuse niedrigeren Wärmeausdehnungskoeffizienten aufweist, kann das Ausgleichselement zumindest teilweise aus Titan, insbesondere einer Titanlegierung hergestellt sein respektive als Herstellungsmaterial zumindest teilweise Titan insbesondere eine Titanlegierung aufweisen.

Mit der erfindungsgemäßen Lösung kann ein Triebwerk, insbesondere ein Gasturbinentriebwerk, mit wenigstens einer erfindungsgemäßen Leitschaufelbaugruppe bereitgestellt werden, das eine verbesserte Kompensation temperaturbedingt auftretender und unterschiedlicher Wärmeausdehnungen eines Verstellelements für die Verstellung von Leitschaufeln einerseits und einem Gehäuse für die Lagerung der Leitschaufeln andererseits ermöglicht.

Die beigefügten Figuren veranschaulichen exemplarisch mögliche Ausführungsvarianten der erfindungsgemäßen Lösung.

Hierbei zeigen:
- Figur 1: ausschnittsweise eine erste Ausführungsvariante einer erfindungsgemäßen Leitschaufelbaugruppe mit einer mehrteilig aufgebauten Ausgleichseinrichtung aufweisend ein Ausgleichselement und ein dieses zumindest teilweise radial außen übergreifendes Abstandselement;
- Figuren 2A-2B: Explosionsdarstellungen der Ausgleichseinrichtung der Figur 1;
- Figur 3: perspektivische Einzeldarstellung des Abstandselements;
- Figur 4: perspektivische Einzeldarstellung des Ausgleichselements;
- Figuren 5A-5B: ausschnittsweise eine zweite Ausführungsvariante einer erfindungsgemäßen Leitschaufelbaugruppe mit einem einzelnen in Ausgleichselement zur Definition einer virtuellen Trapezkontur;
- Figur 6: ausschnittsweise und in perspektivischer Ansicht eine aus dem Stand der Technik bekannte Anordnung mit mehreren Leitschaufelbaugruppen mit je einer Leitschaufelreihe und mehreren Laufschaufelbaugruppen;
- Figur 7: in Schnittdarstellung schematisch ein Gasturbinentriebwerk, in dem wenigstens eine erfindungsgemäße Leitschaufelbaugruppe Verwendung findet.

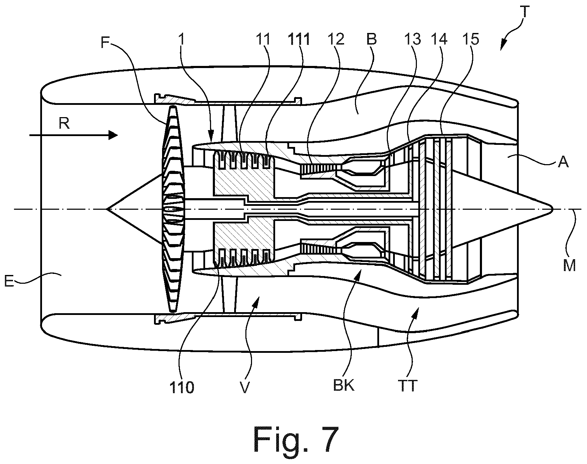

Die Figur 7 veranschaulicht schematisch und in Schnittdarstellung ein (Gasturbinen-) Triebwerk T, bei dem die einzelnen Triebwerkskomponenten entlang einer Mittelachse oder Rotationsachse M hintereinander angeordnet sind. An einem Einlass oder Intake E des Triebwerks T wird Luft entlang einer Eintrittsrichtung E mittels eines Fans F angesaugt. Angetrieben wird dieser Fan F über eine Welle, die von einer Turbine TT in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Bypasskanal B zur Erzeugung des Schubs. Die über den Verdichter V geförderte Luft gelangt schließlich in einen Brennkammerabschnitt BK, in dem die Antriebsenergie zum Antreiben der Turbine TT erzeugt wird. Die Turbine TT weist hierfür eine Hochdruckturbine 13, eine Mitteldruckturbine 14 und eine Niederdruckturbine 15 auf. Die Turbine TT betreibt über die bei der Verbrennung freiwerdende Energie den Fan F an, um dann über die in den Bypasskanal B geförderte Luft den erforderlichen Schub zu erzeugen. Die Luft verlässt hierbei den Bypasskanal B im Bereich eines Auslasses A am Ende des Triebwerks T, an dem die Abgase aus der Turbine TT nach außen strömen. Der Auslass A weist hierbei üblicherweise eine Schubdüse auf.

Der Verdichter V umfasst mehrere in axialer Richtung hintereinander liegende Reihen von Laufschaufeln 110 und dazwischenliegende Reihen von Leitschaufeln 111 im Bereich des Niederdruckverdichters 11. Die um die Mittelachse M rotierenden Reihen von Laufschaufeln 110 und die Reihen stationärer Leitschaufeln 111 sind abwechselnd entlang der Mittelachse M angeordnet und in einem (Verdichter-) Gehäuse 1 des Verdichters V aufgenommen. Die einzelnen Leitschaufeln 111 sind an dem ein- oder mehrteiligen Gehäuse 1 verstellbar gelagert - üblicherweise zusätzlich zu einer radial inneren Lagerung an der Nabe des Verdichters V.

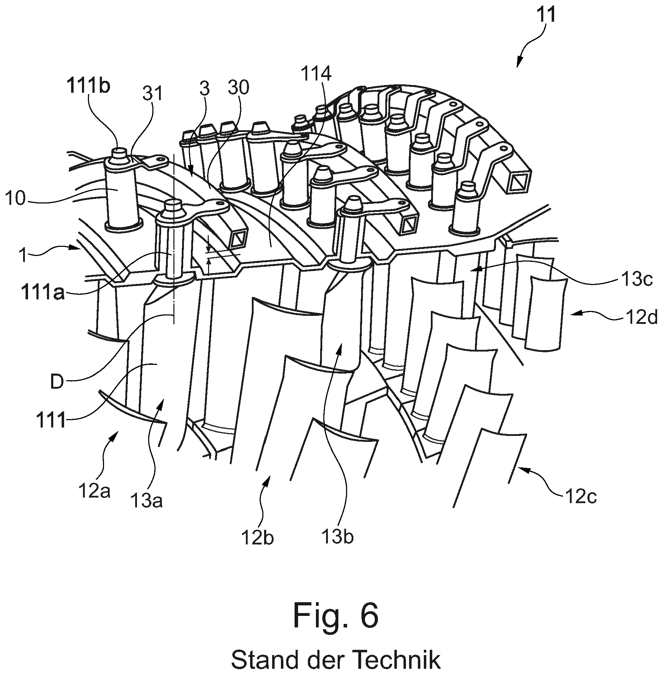

Die Figur 6 zeigt hierbei ausschnittsweise in größerem Detaillierungsgrad eine aus dem Stand der Technik bekannte Anordnung von Laufschaufelreihen 12a bis 12d und Leitschaufelreihen 13a bis 13c für den Niederdruckverdichter 11. Die Leitschaufeln 111 der hintereinander angeordneten Leitschaufelreihen 13a, 13b und 13c sind verstellbar an dem Gehäuse 1 gelagert, um die Stellung der Leitschaufeln 111 in Abhängigkeit von der Verdichterdrehzahl ändern zu können. Hierfür ist ein Lagerzapfen 111a jeder Laufschaufel 111 drehbar in einer Lageröffnung gelagert, die durch einen hülsenförmigen und radial nach außen vorspringenden Lagerfortsatz 10 des Gehäuses 1 ausgebildet ist. Jeder Lagerzapfen 111a ist in einem zugehörigen Lagerfortsatz 10 um eine Drehachse D drehbar gelagert und abgestützt. Dabei durchgreift jeder Lagerzapfen 111a seinen zugeordneten Lagerfortsatz 10, sodass an der Außenseite des Gehäuses 1 ein Zapfenende 111b aus dem Lagerfortsatz 10 herausragt.

An den einzelnen Zapfenenden 111b kann somit jeweils ein Verstellhebel 31 einer Verstelleinrichtung 3 angreifen, um den Lagerzapfen 111a drehen und damit die Stellung der zugehörigen Leitschaufel 111 ändern zu können. Die Hebel 31 einer Leitschaufelreihe 13a, 13b oder 13c sind dabei jeweils an einem Verstellelement in Form eines Verstellrings 30 der Verstelleinrichtung 3 angelenkt. Der - häufig mehrteilige, in wenigstens zwei Segmente unterteilte - Verstellring 30 erstreckt sich umfangsseitig entlang der äußeren Mantelfläche des Gehäuses 1. Durch Verstellung des Verstellrings 30 können somit die hieran angelenkten Verstellhebel 31 und mehrere, üblicherweise alle Leitschaufeln 111 einer Leitschaufelreihe 13a, 13b oder 13c verstellt werden. Die einzelnen Verstellringe 30 für die einzelnen Leitschaufelreihen 13a, 13b und 13c sind hierbei üblicherweise unabhängig voneinander verstellbar.

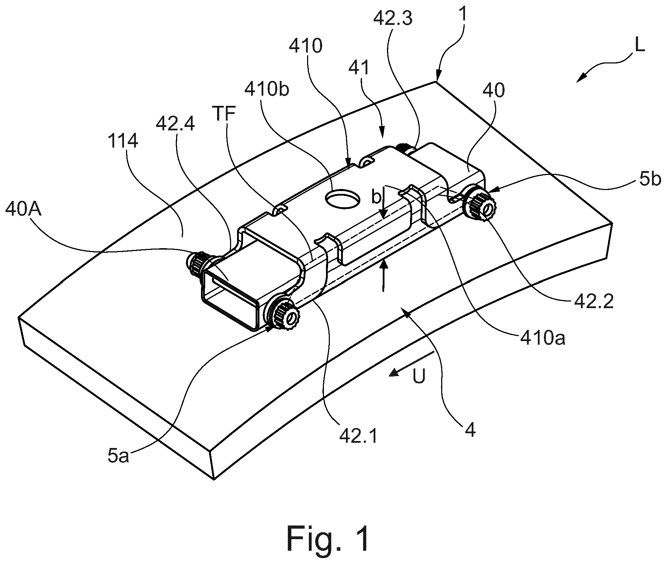

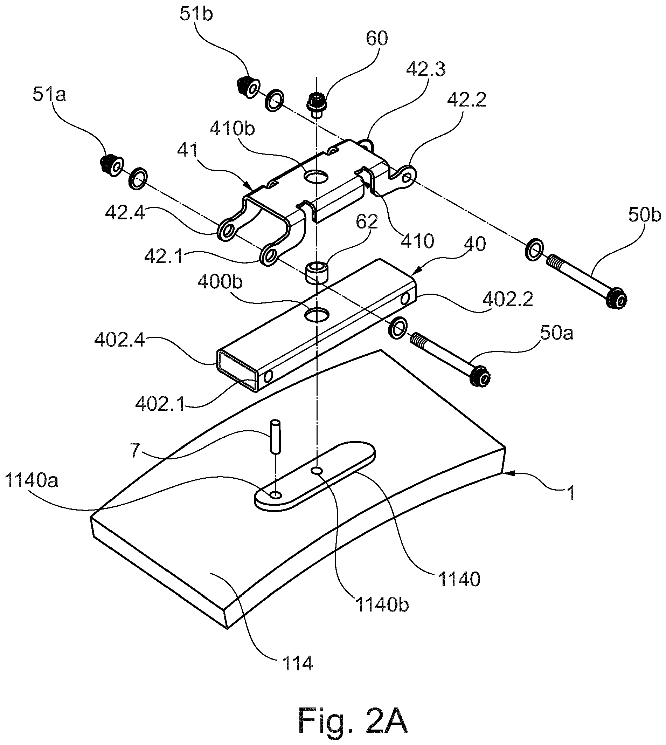

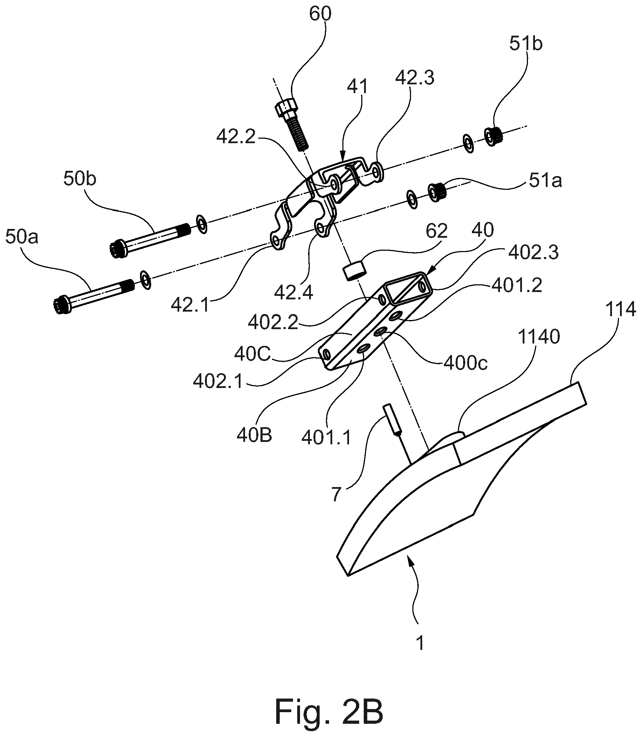

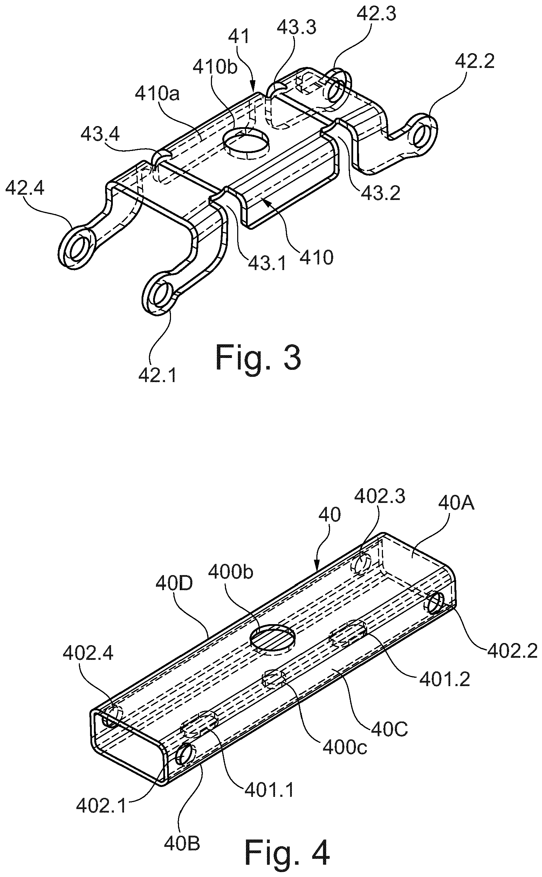

Ein Verstellring 30 stützt sich an einer Außenseite des Gehäuses 1 ab, beispielsweise an einer umfangsseitig umlaufenden Anlagefläche 114. Der Verstellring 30 ist hierbei in radialer Richtung zu der Außenseite des Gehäuses 1 und vorliegend zu der Anlagefläche 114 um einen radialen Abstand a beabstandet. Dieser radiale Abstand a wird über mehrere entlang des Umfangs verteilt angeordnete Ausgleichseinrichtungen vorgegeben, über die der Verstellring 30 an der Außenseite des Gehäuses 1 abgestützt ist und den Verstellring 30 bezüglich des Gehäuses 1 zentriert halten sollen. Im Betrieb des Gasturbinentriebwerks T besteht hierbei aber die Schwierigkeit, dass sich das Gehäuse 1 temperaturbedingt, je nach dem jeweiligen (Betriebs-) Zyklus des Triebwerks T, stärker radial nach außen ausdehnt als der Verstellring 30. Es kann somit zu Ungenauigkeiten bei der Verstellung der Leitschaufeln 111 mithilfe des Verstellrings 30 oder gar zu einem Verklemmen oder Verformen des Verstellrings 30 kommen. Hier soll die erfindungsgemäße Lösung Abhilfe schaffen, zu der mögliche Ausführungsvarianten anhand der Figuren 1, 2A bis 2B, 3, 4 und 5A bis 5B näher veranschaulicht sind.

Die Figuren 1, 2A-2B, 3 und 4 illustrieren in der Zusammenschau eine erste Ausführungsvariante einer erfindungsgemäßen Leitschaufelbaugruppe L, bei der eine Ausgleichseinrichtung 4 mehrteilig und insbesondere mit einem längserstreckten Ausgleichselement 40 und einem hieran befestigten Abstandselement 41 aufgebaut ist. Das Ausgleichselement 40 ist hülsenförmig mit rechteckigen Querschnitt ausgestaltet und an dem die Leitschaufeln 111 drehbar lagernden Gehäuse 1 befestigt.

Die Verbindung mit dem Gehäuse 1 erfolgt hierbei an einem radial vorstehenden Befestigungssockel 1140 der äußeren Mantelfläche 114 des Gehäuses 1. An diesem Befestigungssockel 1140 sind entlang der Umfangsrichtung U zueinander beabstandete Befestigungsöffnungen 1140a und 1140b vorgesehen, beispielsweise in Form von Bohrungen. In die eine Befestigungsöffnung 1140a ist ein Positionierungsstift 7 als Positionierelement eingesteckt. Über diesen Positionierstift 7, der an dem Befestigungssockel 1140 radial vorsteht und im montierten Zustand in eine von zwei Befestigungsöffnungen 401.1, 401.2 an einer der Mantelfläche 114 zugewandten Unterseite 40B des Ausgleichselements 40 eingreift, kann das Ausgleichselement 40 an dem Gehäuse 1 verliersicher angebracht werden, bevor eine endgültige Fixierung über ein separates Befestigungselement in Form eines Schraubbolzen 60 erfolgt. Dieser Schraubbolzen 60 durchgreift eine Durchgangsöffnung 410b an dem Abstandselement 41 sowie zwei einander gegenüberliegende Durchgangsöffnungen 400b und 400c an einer Oberseite 40A und der Unterseite 40B des Ausgleichselements 40. Zur Fixierung des Ausgleichselements 40 an dem Gehäuse 1 ist der Schraubbolzen 60 in die Befestigungsöffnung 1140b des Befestigungssockels 1140 eingedreht. Der Schraubbolzen 60 durchgreift hierbei auch eine innerhalb des hohlen Ausgleichselements 40 und zwischen den Durchgangsöffnungen 400b und 400c positionierte Abstandshülse 62.

Die Durchgangsöffnung 410b in dem Abstandselement 41 der Ausgleichseinrichtung 4 ist zentral an einem Grundkörper 410 des Abstandselements 41 ausgebildet. Dieser Grundkörper 410 bildet eine Anlagefläche 410a aus, an der im bestimmungsgemäß montierten Zustand der Leitschaufelbaugruppe L der Verstellring 30 - gegebenenfalls über hieran zusätzlich befestigte Gleitelemente - anliegen kann und lokal abgestützt ist.

Das Abstandselement 41 ist hierbei mit dem Ausgleichselement 40 derart verbunden und ausgestaltet, dass sich bei einer temperaturbedingten Dehnung des Ausgleichselements 40 entlang der Umfangsrichtung U ein radialer Abstand b zwischen dem Ausgleichselement 40 und dem Grundkörper 410 des Abstandselements 41 verändert, an dem die Anlagefläche 410a für den Verstellring 30 vorgesehen ist. Zu diesem Zweck weist das als Abstandshalter fungierende, längserstreckte Abstandselement 41 durch je zwei seitliche Einkerbungen oder Aussparungen 43.1, 43.4 oder 43.2, 43.3 gegenüber dem Grundkörper 410 flexibel gehaltene Verbindungsabschnitte mit je zwei Verbindungsarmen 42.1, 42.4 oder 42.2, 42.3 auf.

Jedes Paar Verbindungsarme 42.1, 42.4 oder 42.2, 42.3 ist an einem Längsende des Ausgleichselements 40 über je ein Befestigungselement hier z.B. in Form eines Schraubbolzens 50a oder 50b mit dem Ausgleichselement 40 starr oder gelenkig verbunden. Die verbindungsarme 42.1,42.4 oder für 2.2,42.3 liegen dabei verbundenen Zustand einander paarweise gegenüber an zwei Seitenflächen 40C und 40D des Ausgleichselements 40 vor und damit entlang einer Verbindungsachse 50a oder 50b hintereinander, sodass das Ausgleichselement 40 zwischen dem jeweiligen Paar Verbindungsarme 42.1, 42.4 oder 42.2, 42.3 vorliegt. Die Schraubbolzen 50a, 50b für die Befestigung der Verbindungsarme 42.1 - 42.4 erstrecken sich jeweils einerseits durch Öffnungen an den Verbindungsarmen 42.1, 42.4 oder 42.2, 42.3 und andererseits damit fluchtende Verbindungsöffnungen 402.1,402.4 oder 402.2, 402.3 des Ausgleichselements 40. Für die Fixierung sind Muttern 51a, 51b auf die Schraubbolzen 50a, 50b aufgedreht.

Das Ausgleichselement 40 weist vorliegend einen niedrigeren Wärmeausdehnungskoeffizienten auf als das Gehäuse 1, an dem es befestigt ist, und als das Abstandselement 41, das an dem Ausgleichselement 40 festgelegt ist und sich mit einem Grundkörper 410 in radialer Richtung zwischen dem Ausgleichselement 40 und dem Verstellring 30 liegt. Dehnt sich im Betrieb des Gasturbinentriebwerks T das Gehäuse 1 in radialer Richtung aus, geht hiermit eine stärkere Wärmeausdehnung des Abstandselements 40 entlang der Umfangsrichtung U einher. Bei dieser temperaturbedingten Wärmeausdehnung des Ausgleichselements 40 werden die zwei Paare Verbindungsarme 42.1, 42.4 und 42.2, 42.3 des Abstandselements 41, die an jeweils einem Längsende des Abstandselements 40 festgelegt sind, relativ zueinander verlagert. Das Abstandselement 41 und das Ausgleichselement 40 sind hier derart ausgebildet und über die Verbindungsarme 42.1 - 42.4 des Abstandselements 41 derart miteinander verbunden sind, dass sich der Grundkörper 410 des Abstandselements 41, je zwei an einer Seitenfläche 40C oder 40D des Ausgleichselements 40 angeordnete Verbindungsarme 42.1, 42.2 oder 42.3, 42.4 des Abstandselements 41 und das Ausgleichselement 40 selbst entlang der Mittelachse M betrachtet an Kanten einer virtuellen Trapezkontur TF entlang erstrecken (vergleiche Figur 1). Derart führt die Wärmeausdehnung des Ausgleichselements 40 und die damit einhergehende Relativverlagerung der Paare von Verbindungsarmen 42.1, 42.4 und 42.2, 42.3 zu einer radialen Verlagerung des Grundkörpers 410 mit der Anlagefläche 410a relativ zu dem Ausgleichselement 40 und damit in radialer Richtung relativ zu der äußeren Mantelfläche 114 des Gehäuses 1. Diese radiale Verlagerung der Anlagefläche 410a verläuft hierbei üblicherweise entgegengesetzt zu einer radialen Ausdehnung des Gehäuses 1 und einer (im Vergleich geringeren) radialen Ausdehnung des Verstellrings 30, die aber grundsätzlich abhängig vom (Betriebs-) Zyklus des Triebswerks T ist. Folglich wird bei einer temperaturbedingt auftretenden Wärmeausdehnung des Gehäuses 1 radial nach außen der radiale Abstand b durch Streckung der Trapezkonturen TF entlang der Umfangsrichtung U verringert und mithin die Anlagefläche 410a der Mantelfläche 114 des Gehäuses 1 angenähert. Die Anlagefläche 410a für den Verstellring 30 verlagert sich dabei z.B. im Wesentlichen um dieselbe Strecke radial nach innen, um die sich das Gehäuse 1 bei einer Temperaturerhöhung stärker radial nach außen dehnt als der Verstellring 30. Dementsprechend wird eine unterschiedliche radiale Wärmeausdehnung des Verstellrings 30 und des Gehäuses 1 durch die Ausgleichseinrichtung 4 zumindest teilweise kompensiert und eine Zentrierung des Verstellrings 30 zu dem Gehäuse 1 auch im Betrieb des Gasturbinentriebwerks T aufrechterhalten.

Der Grad der radialen Verlagerbarkeit der an dem Grundkörper 410 vorgesehenen Anlagefläche 410a für den Verstellring 3 kann im Übrigen insbesondere durch die Materialdicke des zum Beispiel aus einem (Metall-) Blech hergestellten Abstandselements 41, die Flexibilität zwischen dem Grundkörper 41 und dem jeweils ein Paar von Verbindungsarmen 42.1, 42.4 oder 42.2, 42.3 aufweisenden Verbindungsabschnitten des Abstandselements 41 und/oder dem Grad einer Abwinkelung der Verbindungsarme 42.1 - 42.4 relativ zu dem Grundkörper 41 eingestellt werden.

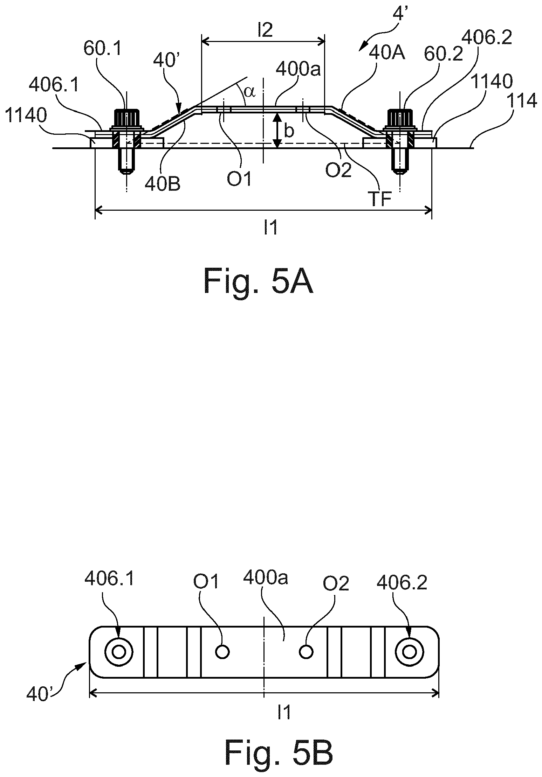

Anhand der Schnittdarstellung der Figur 5A und der Draufsicht der Figur 5B ist eine weitere Ausführungsvariante einer erfindungsgemäßen Leiterschaufelbaugruppe L ausschnittsweise veranschaulicht, bei der eine Ausgleichseinrichtung 4' lediglich ein einzelnes Abstandselement 40' aufweist. Das Ausgleichselement 40' definiert entsprechend der Darstellung der Figur 5A in einer Seitenansicht entlang der Mittelachse M im bestimmungsgemäß montierten Zustand zusammen mit einem Abschnitt des Gehäuses 1, an dem das Ausgleichselement 40' festgelegt ist, eine trapezförmige Kontur. Hierbei weist das sich entlang der Umfangsrichtung U längs erstreckende und als mehrfach abgewinkeltes Blechteil ausgebildete und zum Beispiel aus einer Titanlegierung hergestellte Ausgleichselement 40' eine Länge 11 auf. Zwischen zwei an den Längsenden des Ausgleichselements 40' vorgesehenen Befestigungsabschnitten 406.1 und 406.2 des Ausgleichselements 40' ist ein radial nach außen erhaben vorstehende Abschnitt ausgebildet, der an einer Oberseite 40A des Ausgleichselements 40' die Anlagefläche 400a für den Verstellring 30 ausbildet. Dieser mit der Anlagefläche 400a versehene (mittlere) Abschnitt des Ausgleichselements 40' weist eine kleinere 12 auf (12 > 11) und ist in radialem Abstand b zu der äußeren Mantelfläche 114 des Gehäuses 1 positioniert, wenn das Ausgleichselement 40' bestimmungsgemäß an dem Gehäuse 1 fixiert ist.

Die Fixierung erfolgt hierbei über je ein Befestigungselement in Form eines Schraubbolzens 60.1 oder 60.2. Jeder dieser Schraubbolzen 60.1, 60.2 ist durch eine Durchgangsöffnung in dem zugeordneten Befestigungsabschnitt 406.1 oder 406.2 geführt und in einen an der Mantelfläche 114 vorstehenden Befestigungssockel 1140 des Gehäuses 1 eingedreht.

An dem symmetrisch ausgestalteten Ausgleichselement 40' ist der mittlere Abschnitt mit der Anlagefläche 400a beiderseits entlang der Umfangsrichtung U über je einen seitlichen Abschnitt mit einem jeweiligen Befestigungsabschnitt 406.1 oder 406.2 verbunden. Der seitliche Abschnitt des Ausgleichselements 40' ist dabei unter einem Winkel α zu dem mittleren Abschnitt in Richtung des Gehäuse 1 abgewinkelt. Beispielsweise liegt der Winkel α im Bereich von 15° bis 25°, beispielsweise bei etwa 20°. Bei bestimmungsgemäßer Fixierung an dem Gehäuse 1 definiert das Ausgleichselement 40 zusammen mit dem Abschnitt des Gehäuses 1, an dem es befestigt ist, eine virtuelle Trapezkontur TF, bei der sich der Abschnitt des Gehäuses 1 entlang einer Basis der Trapezkontur TF erstreckt und zwei Schenkel sowie eine der Basis gegenüberliegende, kürzere Grundseite der Trapezkonturen TF durch das Ausgleichselement 40' definiert sind, nämlich durch den die Anlagefläche 400a aufweisenden mittleren Abschnitt und die zwei sich seitlich hieran anschließenden, abgewinkelten Abschnitten.

Um im Übrigen an der Anlagefläche 400a zusätzliche Gleitelement für die Auflage des Verstellrings 30 vorsehen zu können, sind an dem mittleren Abschnitt des Ausgleichselements 40' Durchgangsbohrungen O1 und O2 vorgesehen. An diesen kann ein entsprechendes Gleitelement befestigt werden, um dieses an der Anlagefläche 400a vorzusehen.

### Bezugszeichenliste

- 1: Gehäuse
- 10: Lagerfortsatz
- 11: Niederdruckverdichter
- 110: Laufschaufel
- 111: Leitschaufel
- 111a: Lagerzapfen
- 111b: Zapfenende
- 114: Mantelfläche
- 1140: Befestigungssockel
- 1140a, 1140b: Befestigungsöffnung
- 12: Hochdruckverdichter
- 12a - 12d: Laufschaufelreihe
- 13: Hochdruckturbine
- 13a - 13c: Leitschaufelreihe
- 14: Mitteldruckturbine
- 15: Niederdruckturbine
- 3: Verstelleinrichtung
- 30: Verstellring (Verstellelement)
- 31: Verstellhebel
- 4, 4': Ausgleichseinrichtung
- 40, 40': Ausgleichselement
- 400a: Anlagefläche
- 400b, 400c: Durchgangsöffnung
- 401.1, 401.2: Lageröffnung
- 402.1 - 402.4: Verbindungsöffnung
- 406.1, 406.2: Befestigungsabschnitt
- 40A: Oberseite
- 40B: Unterseite
- 40C, 40D: Seitenfläche
- 41: Abstandselement
- 410: Grundkörper
- 410a: Anlagefläche
- 410b: Durchgangsöffnung
- 42.1 - 42.4: Verbindungsarm
- 43.1 - 43.4: Einkerbung / Aussparung
- 50a, 50b: Schraubbolzen (Befestigungselement)
- 51a, 51b: Mutter
- 5a, 5b: Verbindungsachse
- 60: Schraubbolzen (Befestigungselement)
- 60.1, 60.2: Schraubbolzen (Befestigungselement)
- 62: Abstandshülse
- 7: Positionierstift (Positionierelement)
- A: Auslass
- a: Abstand
- B: Bypasskanal
- b: Abstand
- BK: Brennkammerabschnitt
- D: Drehachse / Spindelachse
- E: Einlass / Intake
- F: Fan
- L: Leitschaufelbaugruppe
- l1, l2: Länge
- M: Mittelachse / Rotationsachse
- O1, O2: Durchgangsbohrung
- R: Eintrittsrichtung
- T: Gasturbinentriebwerk
- TT: Turbine
- U: Umfangsrichtung
- V: Verdichter
- α: Winkel

## Patentansprüche

1. Leitschaufelbaugruppe, mit wenigstens einer Leitschaufelreihe (13a - 13c) und einem sich entlang einer Umfangsrichtung (U) um eine Mittelachse (M) erstreckenden Gehäuse (1) für die wenigstens eine Leitschaufelreihe (13a - 13c), wobei die wenigstens eine Leitschaufelreihe (13a - 13c) mehrere Leitschaufeln (11) umfasst, die jeweils mittels einer Verstelleinrichtung (3) der Leitschaufelbaugruppe (L) verstellbar an dem Gehäuse (1) gelagert sind, und wobei
- die Verstelleinrichtung (3) mindestens ein Verstellelement (30) zur Verstellung der Leitschaufeln (11) umfasst, das bezüglich der Mittelachse (M) radial zu einer Außenseite des Gehäuses (1) beabstandet ist, und
- eine Ausgleichseinrichtung (4, 4') vorgesehen ist, über die ein radialer Abstand (a) des Verstellelements (30) zu der Außenseite des Gehäuses (1) vorgegeben ist und die unterschiedliche Wärmeausdehnungen des Verstellelements (30) einerseits und des Gehäuses (1) andererseits zumindest teilweise kompensiert,
wobei die Ausgleichseinrichtung (4, 4') eine Anlagefläche (410a, 400a) für das Verstellelement (30) definiert und ein zwischen dem Verstellelement (30) und der Außenseite des Gehäuses (1) angeordnetes Ausgleichselement (40, 40') aufweist, welches an dem Gehäuse (1) befestigt ist und bei einer Wärmeausdehnung in Umfangsrichtung (U) zu einer radialen Verlagerung der Anlagefläche (410a, 400a) für das Verstellelement (30) führt,
**dadurch gekennzeichnet, dass**
die Ausgleichseinrichtung (4) wenigstens zweiteilig aufgebaut ist und zusätzlich zu dem Ausgleichselement (40) ein separates, hiermit verbundenes Abstandselement (41) aufweist, an dem die Anlagefläche (410a) vorgesehen ist, und das Abstandselement (41) und das Ausgleichselement (40) derart ausgebildet und miteinander verbunden sind, dass sich bei einer temperaturbedingten Dehnung des Ausgleichselements (40) entlang der Umfangsrichtung (U) ein radialer Abstand (b) zwischen dem Ausgleichselement (40) und einem Abschnitt (410) des Abstandselements (41) verändert, an dem die Anlagefläche (410a) für das Verstellelement (30) vorgesehen ist.

2. Leitschaufelbaugruppe nach Anspruch 1, **dadurch gekennzeichnet, dass** das Ausgleichselement (40) einen höheren Wärmeausdehnungskoeffizienten aufweist als das Gehäuse (1).

3. Leitschaufelbaugruppe nach Anspruch 1 oder 2, **dadurch gekennzeichnet, dass** das an dem Gehäuse (1) befestigte Ausgleichselement (40) einen höheren Wärmeausdehnungskoeffizienten aufweist als das Abstandselement (41).

4. Leitschaufelbaugruppe nach einem der Ansprüche 1 bis 3, **dadurch gekennzeichnet, dass** das Abstandselement (41) an wenigstens zwei in Umfangsrichtung (U) zueinander beabstandeten Befestigungsstellen mit dem Ausgleichselement (40) verbunden ist.

5. Leitschaufelbaugruppe nach Anspruch 4, **dadurch gekennzeichnet, dass** das Abstandselement (41) für die Verbindung mit dem Ausgleichselement (40) wenigstens zwei Verbindungsarme (42.1 - 42.4) aufweist, zwischen denen sich ein radial bezüglich der Mittelachse (M) zu dem Ausgleichselement (40) beabstandeter Grundkörper (410) des Abstandselements (41) erstreckt, an dem die Anlagefläche (410a) für das Verstellelement (30) vorgesehen ist.

6. Leitschaufelbaugruppe nach Anspruch 5, **dadurch gekennzeichnet, dass** das Abstandselement (41) über vier Verbindungsarme (42.1 - 42.4) mit dem Ausgleichselements (40) verbunden ist, die paarweise einander gegenüberliegend an zwei Seitenflächen (40C, 40D) des Ausgleichselements (40) angeordnet sind, die bezogen auf die Mittelachse (M) voneinander abgewandt sind.

7. Leitschaufelbaugruppe nach Anspruch 5 oder 6, **dadurch gekennzeichnet, dass** das Abstandselement (41) und das Ausgleichselement (40) derart ausgebildet und miteinander verbunden sind, dass sich der Grundkörper (410) des Abstandselements (41), zwei Verbindungsarme (42.1, 42.2; 42.3, 42.4) des Abstandselements (41) und das Ausgleichselement (40) entlang der Mittelachse (M) betrachtet an Kanten einer virtuellen Trapezkontur (TF) entlang erstrecken.

8. Leitschaufelbaugruppe nach Anspruch 7, **dadurch gekennzeichnet, dass** sich das Ausgleichselement (40) an einer Basis der virtuellen Trapezkontur (TF), der Grundkörper (410) an einer gegenüber der Basis kürzeren Grundseite der virtuellen Trapezkontur (TF) und die zwei Verbindungsarme (42.1, 42.2; 42.3, 42.4) an zwei Schenkeln der virtuellen Trapezkontur (TF) entlang erstrecken und/oder die virtuelle Trapezkontur (TF) der Kontur eines gleichschenkligen Trapezes entspricht.

9. Leitschaufelbaugruppe nach einem der vorhergehenden Ansprüche, **dadurch gekennzeichnet, dass** das Ausgleichselement (40) stab-, rohr- oder hülsenförmig ausgebildet ist.

10. Leitschaufelbaugruppe nach Anspruch 1, **dadurch gekennzeichnet, dass** das Ausgleichselement (40') einen niedrigeren Wärmeausdehnungskoeffizienten aufweist als das Gehäuse (1) und/oder die Anlagefläche (400a) für das Verstellelement (30) ausbildet.

11. Leitschaufelbaugruppe nach Anspruch 1 oder 10, **dadurch gekennzeichnet, dass** sich das Ausgleichselement (40') und ein Abschnitt des Gehäuses (1), an dem es befestigt ist, entlang der Kanten einer virtuellen Trapezkontur (TF) erstrecken, wobei sich der Abschnitt des Gehäuses (1) entlang einer Kante einer Basis der Trapezkontur (TF) erstreckt und zwei Schenkel und eine der Basis gegenüberliegende, kürzere Grundseite der Trapezkontur (TF) durch das Ausgleichselement (40') definiert sind.

12. Leitschaufelbaugruppe nach einem der vorhergehenden Ansprüche, **dadurch gekennzeichnet, dass**
- das Verstellelement (30) an der Ausgleichseinrichtung (4, 4') abgestützt ist und/oder entlang der Umfangsrichtung (U) mehrere zueinander beabstandete, jeweils mit dem Gehäuse (1) gekoppelte Ausgleichseinrichtungen (4, 4') vorgesehen sind, und/oder
- das Verstellelement als einteiliger oder mehrteiliger Verstellring (30) ausgebildet und/oder ringsegment- oder ringförmig ist.

13. Triebwerk mit wenigstens einer Leitschaufelbaugruppe (L) nach einem der vorhergehenden Ansprüche 1 bis 12.

## Claims

1. Guide vane assembly group with at least one guide vane row (13a - 13c) and a housing (1) for the at least one guide vane row (13a - 13c) extending along a circumferential direction (U) about a central axis (M), wherein the at least one guide vane row (13a - 13c) comprises multiple guide vanes (11) that are respectively mounted at the housing (1) in an adjustable manner by means of an adjusting appliance (3) of the guide vane assembly group (L), and wherein
- the adjusting appliance (3) comprises at least one adjusting element (30) for adjusting the guide vanes (11) that is arranged at a radial distance to an outer side of the housing (1) with respect to the central axis (M), and
- a compensation device (4, 4') is provided via which a radial distance (a) of the adjusting element (30) to the outer side of the housing (1) is predetermined, and the different thermal expansions of the adjusting element (30), on the one hand, and of the housing (1), on the other, are at least partially compensated,
wherein the compensation device (4, 4') defines a contact surface (410a, 400a) for the adjusting element (30) and has a compensation element (40, 40') that is arranged between the adjusting element (30) and the outer side of the housing (1) and that is attached at the housing (1) and, in the event of a thermal expansion in the circumferential direction (U), leads to a radial displacement of the contact surface (410a, 400a) for the adjusting element (30),
**characterized in that**
the compensation device (4) is constructed of at least two parts and, in addition to the compensation element (40), has a separate spacer element (41) which is connected therewith and at which the contact surface (410a) is provided, and that the spacer element (41) and the compensation element (40) are embodied and connected to each other in such a manner that, in the event of a temperature-related expansion of the compensation element (40) along the circumferential direction (U), a radial distance (b) between the compensation element (40) and a section (410) of the spacer element (41), at which the contact surface (410a) for the adjusting element (30) is provided, changes.

2. Guide vane assembly group according to claim 1, **characterized in that** the compensation element (40) has a higher thermal expansion coefficient than the housing (1).

3. Guide vane assembly group according to claim 1 or 2, **characterized in that** the compensation element (40) that is attached at the housing (1) has a higher thermal expansion coefficient than the spacer element (41).

4. Guide vane assembly group according to one of the claims 1 to 3, **characterized in that** the spacer element (41) is connected to the compensation element (40) at least at two attachment locations that are arranged at a distance to each other in the circumferential direction (U).

5. Guide vane assembly group according to claim 4, **characterized in that** the spacer element (41) has at least two connecting arms (42.1 - 42.4) for connecting to the compensation element (40), with a base body (410) of the spacer element (41), which is arranged at a radial distance to the compensation element (40) with respect to the central axis (M) and at which the contact surface (410a) for the adjusting element (30) is provided, extending in between.

6. Guide assembly according to claim 5, **characterized in that** the spacer element (41) is connected to the compensation element (40) via four connecting arms (42.1 - 42.4) that are arranged in pairs opposite each other at two side surfaces (40C, 40D) of the compensation element (40) that are facing away from each other with respect to the central axis (M).

7. Guide vane assembly group according to claim 5 or 6, **characterized in that** the spacer element (41) and the compensation element (40) are embodied and connected to each other in such a manner that the base body (410) of the spacer element (41), two connecting arms (42.1, 42.2; 42.3, 42.4) of the spacer element (41) and the compensation element (40) extend along the edges of a virtual trapezoidal contour (TF), as viewed along the central axis (M).

8. Guide vane assembly group according to claim 7, **characterized in that** the compensation element (40) extends along a base of the virtual trapezoidal contour (TF), the base body (410) extends along a basic side that is shorter as compared to the base of the virtual trapezoidal contour (TF), and the two connecting arms (42.1, 42.2; 42.3, 42.4) extend along two legs of the virtual trapezoidal contour (TF), and/or the virtual trapezoidal contour (TF) corresponds to the contour of an isosceles trapezium.

9. Guide vane assembly group according to one of the preceding claims, **characterized in that** the compensation element (40) is embodied in a bar-shaped, tubular or sleeve-shaped manner.

10. Guide vane assembly group according to claim 1, **characterized in that** the compensation element (40') has a lower thermal expansion coefficient than the housing (1) and/or forms the contact surface (400a) for the adjusting element (30).

11. Guide vane assembly group according to claim 1 or 10, **characterized in that** the compensation element (40') and a section of the housing (1) at which it is attached extend along the edges of a virtual trapezoidal contour (TF), wherein the section of the housing (1) extends along an edge of a base of the trapezoidal contour (TF), and two legs and a shorter basic side of the trapezoidal contour (TF) that is positioned opposite the base are defined by the compensation element (40').

12. Guide vane assembly group according to one of the preceding claims, **characterized in that**
- the adjusting element (30) is supported at the compensation device (4, 4'), and/or multiple compensation devices (4, 4') that are arranged at a distance to each other and respectively coupled with the housing (1) are provided along the circumferential direction (U),
and/or
- the adjusting element is embodied as a one-piece or multi-piece adjusting ring (30) and/or is ring-segment-shaped or ring-shaped.

13. Engine with at least one guide vane assembly group (L) according to one of the preceding claims 1 to 12.

## Revendications

1. Ensemble d'aubes directrices, comprenant au moins une rangée d'aubes directrices (13a-13c) et un boîtier (1) s'étendant le long d'une direction périphérique (U) autour d'un axe médian (M) pour l'au moins une rangée d'aubes directrices (13a-13c), l'au moins une rangée d'aubes directrices (13a-13c) comprenant plusieurs aubes directrices (11) qui sont supportées sur le boîtier (1) de manière réglable à chaque fois au moyen d'un dispositif de réglage (3) de l'ensemble d'aubes directrices (L), et
- le dispositif de réglage (3) comprenant au moins un élément de réglage (30) pour le réglage des aubes directrices (11), qui est espacé par rapport à l'axe médian (M) radialement par rapport à un côté extérieur du boîtier (1), et
- un dispositif de compensation (4, 4') étant prévu, par le biais duquel une distance radiale (a) de l'élément de réglage (30) au côté extérieur du boîtier (1) est prédéfinie et compensant au moins en partie les différentes dilatations thermiques d'une part de l'élément de réglage (30) et d'autre part du boîtier (1), le dispositif de compensation (4, 4') définissant une surface d'appui (410a, 400a) pour l'élément de réglage (30) et présentant un élément de compensation (40, 40') disposé entre l'élément de réglage (30) et le côté extérieur du boîtier (1), lequel est fixé au boîtier (1) et, en cas de dilatation thermique dans la direction périphérique (U), entraîne un décalage radial de la surface d'appui (410a, 400a) pour l'élément de réglage (30),
**caractérisé en ce que**
le dispositif de compensation (4) est réalisé au moins en deux parties et présente, en plus de l'élément de compensation (40), un élément d'espacement séparé (41) connecté à celui-ci, au niveau duquel est prévue la surface d'appui (410a), et l'élément d'espacement (41) et l'élément de compensation (40) sont réalisés et connectés l'un à l'autre de telle sorte que dans le cas d'une dilatation de l'élément de compensation (40) provoquée par la température le long de la direction périphérique (U), il se produise une variation de la distance radiale (b) entre l'élément de compensation (40) et une portion (410) de l'élément d'espacement (41) au niveau duquel est prévue la surface d'appui (410a) pour l'élément de réglage (30).

2. Ensemble d'aubes directrices selon la revendication 1, **caractérisé en ce que** l'élément de compensation (40) présente un coefficient de dilatation thermique supérieur à celui du boîtier (1) .

3. Ensemble d'aubes directrices selon la revendication 1 ou 2, **caractérisé en ce que** l'élément de compensation (40) fixé au boîtier (1) présente un coefficient de dilatation thermique supérieur à celui de l'élément d'espacement (41).

4. Ensemble d'aubes directrices selon l'une quelconque des revendications 1 à 3, **caractérisé en ce que** l'élément d'espacement (41) est connecté à l'élément de compensation (40) au niveau d'au moins deux points de fixation espacés l'un de l'autre dans la direction périphérique (U).

5. Ensemble d'aubes directrices selon la revendication 4, **caractérisé en ce que** l'élément d'espacement (41) présente, pour la connexion à l'élément de compensation (40), au moins deux bras de liaison (42.1-42.4) entre lesquels s'étend un corps de base (410) de l'élément d'espacement (41) espacé de l'élément de compensation (40) radialement par rapport à l'axe médian (M), au niveau duquel est prévue la surface d'appui (410a) pour l'élément de réglage (30).

6. Ensemble d'aubes directrices selon la revendication 5, **caractérisé en ce que** l'élément d'espacement (41) est connecté à l'élément de compensation (40) par le biais de quatre bras de liaison (42.1-42.4) qui sont disposés par paires en regard les uns des autres au niveau de deux surfaces latérales (40C, 40D) de l'élément de compensation (40) qui sont opposées l'une à l'autre par rapport à l'axe médian (M).

7. Ensemble d'aubes directrices selon la revendication 5 ou 6, **caractérisé en ce que** l'élément d'espacement (41) et l'élément de compensation (40) sont réalisés et connectés l'un à l'autre de telle sorte que le corps de base (410) de l'élément d'espacement (41), deux bras de liaison (42.1, 42.2 ; 42.3, 42.4) de l'élément d'espacement (41) et l'élément de compensation (40) s'étendent le long d'arêtes d'un contour trapézoïdal virtuel (TF), vu le long de l'axe médian (M).

8. Ensemble d'aubes directrices selon la revendication 7, **caractérisé en ce que** l'élément de compensation (40) s'étend sur une base du contour trapézoïdal virtuel (TF), le corps de base (410) s'étend sur un côté de base du contour trapézoïdal virtuel (TF) plus court par rapport à la base et les deux bras de liaison (42.1, 42.2 ; 42.3, 42.4) s'étendent le long de deux branches du contour trapézoïdal virtuel (TF) et/ou le contour trapézoïdal virtuel (TF) correspond au contour d'un trapèze isocèle.

9. Ensemble d'aubes directrices selon l'une quelconque des revendications précédentes, **caractérisé en ce que** l'élément de compensation (40) est réalisé en forme de barre, de tube ou de douille.

10. Ensemble d'aubes directrices selon la revendication 1, **caractérisé en ce que** l'élément de compensation (40') présente un plus faible coefficient de dilatation thermique que le boîtier (1) et/ou constitue la surface d'appui (400a) pour l'élément de réglage (30).

11. Ensemble d'aubes directrices selon la revendication 1 ou 10, **caractérisé en ce que** l'élément de compensation (40') et une portion du boîtier (1) à laquelle il est fixé, s'étendent le long des arêtes d'un contour trapézoïdal virtuel (TF), la portion du boîtier (1) s'étendant le long d'une arête d'une base du contour trapézoïdal (TF) et deux branches et un côté de base plus court du contour trapézoïdal (TF) opposé à la base étant définis par l'élément de compensation (40').

12. Ensemble d'aubes directrices selon l'une quelconque des revendications précédentes, **caractérisé en ce que**
- l'élément de réglage (30) est supporté sur le dispositif de compensation (4, 4') et/ou plusieurs dispositifs de compensation (4, 4') espacés les uns des autres, à chaque fois accouplés au boîtier (1) sont prévus le long de la direction périphérique (U),
et/ou
- l'élément de réglage est réalisé sous forme de bague de réglage (30) d'une seule pièce ou en plusieurs parties et/ou est annulaire ou en forme de segment annulaire.

13. Groupe moteur comprenant au moins un ensemble d'aubes directrices (L) selon l'une quelconque des revendications précédentes 1 à 12.
